# EUROPEAN PATENT APPLICATION

(11) **EP 1 772 651 A2**
(43) Date of publication of application: **11.04.2007**
(21) Application number: 06020960.8
(22) Date of filing: 05.10.2006
(51) Int. Cl.: F16H 61/04, F16H 61/682

(54) **A method of controlling a vehicle transmission**

(30) Priority: 05.10.2005 GB 0520203
(71) Applicant: J.C. BAMFORD EXCAVATORS LIMITED, Uttoxeter Staffordshire ST14 5JP (GB)
(72) Inventor: Earp, Leonard, Wrexham, LL12 8DF (GB); Littler, Richard Thomas 1 Coed Y Rae Cottages, Oswestry, Shropshire SY10 8JG (GB)
(74) Representative: Lockey, Robert Alexander

(57) **Abstract**

A method of controlling a vehicle transmission during a gear change thereof, the vehicle transmission including an input shaft, an output shaft, input gearing and output gearing, a first clutch for establishing a driving connection between the input shaft and the input gearing to drive the output shaft in a first direction, and a second clutch for establishing a driving connection between the input shaft and the input gearing to drive the output shaft in an opposite direction, the method comprising the steps of disengaging the driving connection between the input shaft and the input gearing by means of the first clutch, and subsequently establishing a driving connection between the input shaft and the input gearing by means of the second clutch to retard the rotational speed of the input gearing.

## Description

This invention relates to a method of controlling a vehicle transmission. The vehicle transmission being of the kind for interposition between a prime mover of the vehicle and ground-engaging means of the vehicle and providing a plurality of gear ratios by which the ground-engaging means can be driven by the prime mover. The invention has been devised primary, but not exclusively for a material handling vehicle transmission, such as, for examples, a tractor, loader type or similar vehicle for industrial and/or agricultural use, in which the ground engaging means typically comprises wheels, but could also include crawler tracks.

Vehicles such as tractors or loaders conventionally have utilised transmissions which provide a range of different gear ratios, for example four ratios. Such a transmission typically includes a plurality of clutches, one of which is conventionally known as the "forward" clutch, and one of which is conventionally known as a "reverse" clutch. The "forward" clutch is operable to engage a gear(s) within the transmission to effect rotation of the output shaft such that the vehicle moves forwards and the "reverse" clutch is operable to engage a further gear(s) within the transmission to effect rotation of the output shaft in an opposite direction. At least one other clutch is also provided which is operable to engage yet further gears within the transmission so as to provide the different gear ratios.

One problem with synchromesh transmissions is that during up-shifting (i.e. changing from first gear to second gear, second gear to third gear or third gear to fourth gear), it is necessary, particularly when travelling up an incline, to effect up-shifting as quick as possible. This is because a slow gear change could result in the vehicle slowing excessively or even rolling backwards. It has thus been proposed to slow the input gearing to the transmission in order to be able to smoothly effect changing for the gearing within the transmission. One solution to this problem is by using a brake to slow the input gearing down during up-shifting. However, this results in larger overall dimensions and requirements of the transmission, which is undesirable.

It is an object of the present invention to provide a vehicle transmission which addresses this problem.

According to a first aspect of the invention there is provided a method of controlling a vehicle transmission during a gear change thereof, the vehicle transmission including an input shaft, an output shaft, input gearing and output gearing, a first clutch for establishing a driving connection between the input shaft and the input gearing to drive the output shaft in a first direction, and a second clutch for establishing a driving connection between the input shaft and the input gearing to drive the output shaft in an opposite direction, the method comprising the steps of:-
disengaging the driving connection between the input shaft and the input gearing by means of the first clutch; and
subsequently establishing a driving connection between the input shaft and the input gearing by means of the second clutch to retard rotational speed of the input gearing.

Preferably the method is carried out during an up-shift gear change, e.g. from first forward gear to second forward gear or from first reverse gear to second reverse gear.

The driving connection established by means of the second clutch may be once-only, with said driving connection being discontinued thereafter.

Alternatively, the driving connection established by means of the second clutch may be achieved by repeated establishment of said driving connection between the input shaft and the output shaft.

The method may include an additional step of selecting neutral gear within the transmission after the driving connection between the input shaft and the input gearing by means of the first clutch has been disengaged.

The rotational speed of the input gearing may be retarded until the ratio of the rotational speeds of the input shaft and output shaft reaches a specific value.

The specific value may correspond to the rotational speeds of the required parts of the input gearing and output gearing being substantially equal.

The rotational speed of the input gearing may be monitored by a first sensing means.

The rotational speed of the output gearing may be monitored by a second sensing means. For example, the rotational speed of the lay shaft may be monitored.

Data from the first and second sensing means may be compared to determine whether further retardation of the input gearing is required.

The first clutch may be a forward clutch of the transmission and the second clutch may be a reverse clutch of the transmission.

Alternatively, the first clutch may be a reverse clutch of the transmission and the second clutch may be a forward clutch of the transmission.

According to a second aspect of the invention, we provide a control unit operable to perform a method according to the first aspect of the invention.

The invention will now be described by way of example only with reference to the accompanying drawings, of which:

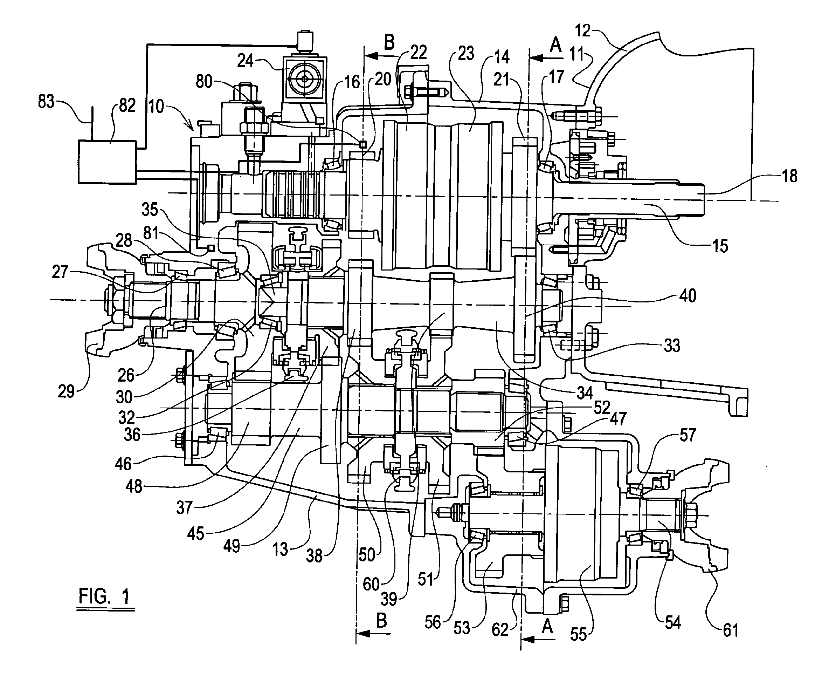

Figure 1 is a side, part cross-sectional, view of a vehicle transmission;

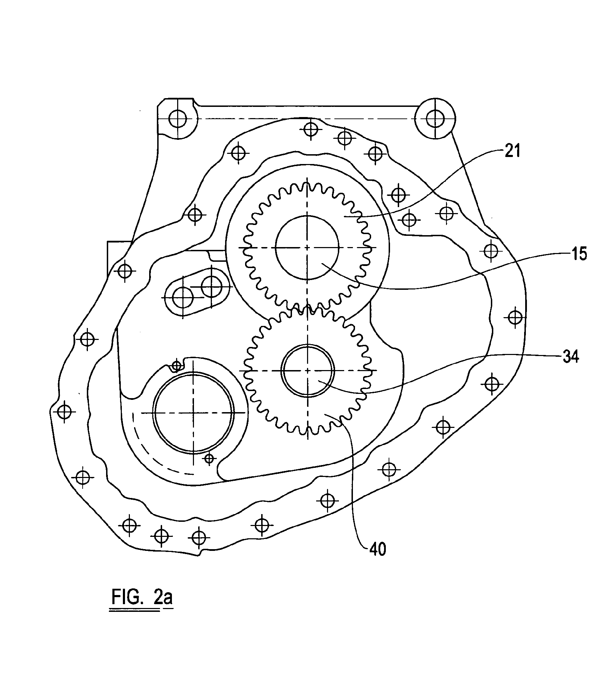

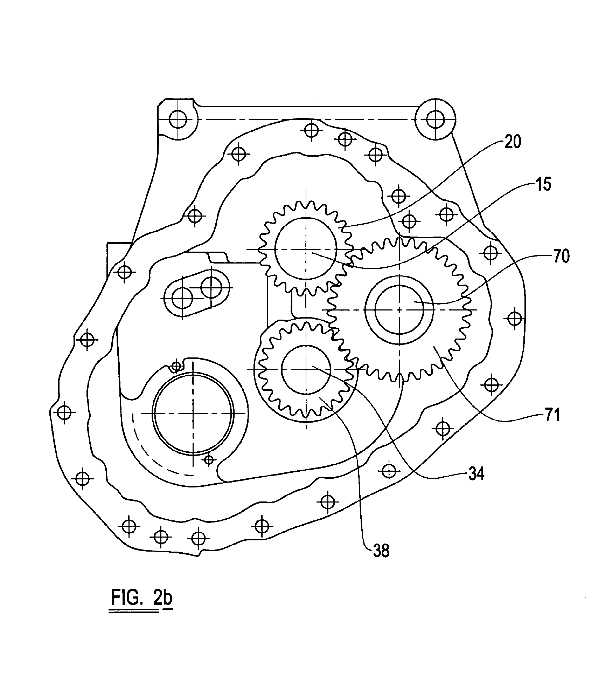

Figure 2a is a cross-sectional view through the Section A-A of Figure 1;
Figure 2b is a cross-sectional view through the Section B-B of Figure 1; and
Figure 3 is a flow diagram of the method in accordance with the invention.

Referring to the Figures, these show a vehicle transmission, comprising a casing indicated generally at 10, which includes a plurality of casing parts held together by bolts. The transmission also includes an input shaft 15, an output shaft 26, a main shaft 34, and lay shaft 45.

One of the casing parts, indicated at 11, includes a portion 12 which is generally in the form of a bell-shaped housing for connection to a prime mover in the form of an internal combustion engine. The bell-housing is shaped so as to receive a torque converter of known kind, although it will be appreciated that a torque converter is not essential to the invention. The casing part 11 forms one end of the casing 10 of the transmission: the opposite end of the casing 10 is afforded by a casing part 13 and there is also an intermediate casing part 14 supported therebetween.

The input shaft 15 is supported on roller bearings 16, 17 in the casing parts 13, 14 respectively. The input shaft 15 protrudes through the casing part 11 and into the bell-shaped portion 12 and ends in a splined portion 18 for engagement with an output of a torque converter (not shown) whose input is connected to an output, such as the crankshaft, of the internal combustion engine.

The input shaft 15 supports two spaced gears 20, 21, a "reverse" clutch 22 and a "forward" clutch 23. The clutches 22, 23 are each a multi-plate hydraulically operated clutch, whereby a torque-transmitting connection can be established between the input shaft 15 and its respective gear 20, 21. Each clutch 22, 23 is generally conventional in its construction and will therefore not be described in detail herein, except to say that it includes a plurality of interleaved annular plates respectively rotationally fast with a clutch drum and a clutch hub which in turn are rotationally fast with the input shaft 15 and its respective gear 20, 21. The interleaved plates are arranged to be brought into frictional torque-transmitting connection with one another when the clutch is supplied with hydraulic fluid under pressure under the control of a valve or valves 24, such fluid being introduced by way of a drilling, down the interior of the input shaft 15 and operating a piston incorporated in the clutch 22, 23.

The output shaft 26 is supported in the casing part 13, by bearings 27, 28. Outside the casing part 13, the output shaft 26 has an output drive connector 29 secured thereto, for connection with further drive line components leading to a ground-engaging means of the vehicle. In this example, such components may include a differential gearing and/or one or more universal jointed drive shafts, for connection to a pair of road wheels, or a crawler track, for the vehicle.

Within the casing part 13, the output shaft 26 supports an output gear 30 and within a recess in the innermost end of the gear output 30 there is supported in a bearing 32 one end 35 of the main shaft 34. The other end of the main shaft 34 is carried by a taper bearing 33 in the casing part 14. The end of the main shaft 34 adjacent the gear 30 carries a clutch 36. The clutch 36 is located between the gear 30 and a gear 37. The gear 37 is carried by and rotatable around the main shaft 34, which also supports three spaced gears 38, 39, 40 each of which is rotationally fast with the main shaft 34.

The clutch 36 is operable to establish a torque-transmitting connection between the main shaft 34 and the output shaft 26, or between the gear 37 and the main shaft 34.

The lay shaft 45 is also provided and is supported by bearings 46, 47 in the casing parts 13, 14 respectively. The lay shaft 45 is provided with a rotationally fast gear 48 which meshes with the gear 30. The lay shaft 45 also carries four other gears 49, 50, 51, 52. The gear 49 is rotationally fast with the lay shaft 45 and meshes with the gear 37 on the main shaft 34.

The gears 50, 51 are carried by and rotatable around the lay shaft 45 at either side of a clutch 60. The clutch 60 is operable to establish a torque-transmitting connection between either of the gears 50, 51 and the lay shaft 45.

The gear 50 meshes with the gear 38 on the main shaft 34 and the gear 51 meshes with the gear 39 on the main shaft 34. The gear 40 meshes with the gear 21 on the input shaft 15.

The gear 52 is positioned between the gear 51 and the roller bearing 47 and is rotationally fast with the lay shaft 45. The gear 52 meshes with a further gear 53 carried by and rotatable around an additional output shaft 54 and able to be clutched thereto by a clutch 55, which is of the type above described with reference to the clutches 22, 23. The shaft 54 is supported in taper roller bearings 56, 57 and extends out of an additional casing part 62. This end of the shaft 54 supports a drive flange 61 for connection by way of the drive line components such as universally jointed shafts and so on, to further driveable wheels of the vehicle.

In a typical vehicle, the output at the flange 61 will be brought into use, by engagement of the clutch 55, only when the vehicle is required to be used in four-wheel drive mode, the vehicle normally being used with two wheels driven only from the driving flange 29.

As can been seen from figure s 2a and 2b, the transmission also includes a further lay shaft 70, which is offset to one side of the shafts 15, 34 and 45 and which supports a reverser gear 71. The reverser gear 71 meshes with the gear 20 on the input shaft 15 and with the gear 38 on the main shaft 34. The purpose of the reverser gear 71, once connected to the input shaft 15 by the clutch 22, is to reverse the direction of rotation of the output shaft 26 so as to effect, through the ground-engaging means, reversing of the vehicle.

The transmission also includes first and second sensors, shown by way of example at 80 and 81. The first sensor 80 is positioned near the input gearing to monitor the rotational speed thereof and the second sensor 81 is positioned near the output gear 30 (although it could be positioned elsewhere) to monitor the rotational speed of the output gearing. The signals from the sensors are sent to a control unit 82, which is operable to receive a demand signal on line 83 and control the valve(s) 24.

By input gearing we mean all gearing provided on the input shaft 15, main shaft 34 and lay shaft 45 which are in driving relationship with each other when the transmission is in neutral (i.e. gears 20, 21, 38, 39, 40, 50, 51 and 71). Furthermore by output gearing we mean all gearing provided on the output shaft 26 (or output shaft 54), main shaft 34 and lay shaft 45 which are in driving relationship with each other when the transmission is in neutral (i.e. gears 30, 37, 48, 49, 52 and 53).

When the transmission is said to be in neutral, or when neutral gear is selected, we mean that no mechanical gear is selected such that there is no torque path through the transmission.

By required parts, we mean the elements of the transmission (i.e. a combination of the gears and/or shafts) which must be engaged to provide a driving connection between the input gearing and the output gearing to facilitate a torque path between the input shaft 15 and the output shaft 26 through each respective gear.

The transmission also includes first and second sensors 80, 81 positioned near the input gearing and output gearing, respectively. The sensor 80 is positioned near the gear 20 of the input gearing to measure its rotational speed. The rotational speed of each of the other parts of the input gearing can be deduced from the rotational speed of the gear 20. Similarly, the sensor 81 is positioned near the output shaft 26 of the output gearing to measure its rotational speed. The rotational speed of each of the other parts of the output gearing can be deduced from the rotational speed of the output shaft 26.

The transmission as above described includes four forward driving paths providing a gear ratio between the input shaft and output shaft which increases from the first to the fourth forward driving path. The first forward driving path (first forward gear) is provided along the input shaft 15 and the gears 21, 40, 39, 51, 48 and 30 to the output shaft 26. The second forward driving path (second forward gear) is provided along the input shaft 15 and the gears 21, 40, 38, 50, 48, and 30 to the output shaft 26. The third forward driving path (third forward gear) is provided along the input shaft 15 and the gears 21, 40, 37, 49, 48 and 30 to the output shaft 26. Finally, the fourth forward driving path (fourth forward gear) is provided along the input shaft 15 and the gears 21 and 40 to the output shaft 26. The fourth forward driving path in this example provides a 1:1 ratio between the rotation speeds of the input shaft 15 and the output shaft 26.

There are also four reverse driving paths, which correspond to each of the four forward driving paths. The first reverse driving path (first reverse gear) is provided along the input shaft 15 and the gears 20, 71, 38, 39, 51, 48 and 30 to the output shaft 26. The second reverse driving path (second reverse gear) is provided along the input shaft 15 and the gears 20, 71, 38, 50, 48, and 30 to the output shaft 26. The third reverse driving path (third reverse gear) is provided along the input shaft 15 and the gears 20, 71, 38, 37, 49, 48 and 30 to the output shaft 26. Finally, the fourth reverse driving path (fourth reverse gear) is provided along the input shaft 15 and the gears 20, 71, 38 to the output shaft 26.

To engage first forward gear, the clutch 60 establishes a torque-transmitting connection between the gear 51 and the lay shaft 45 and the clutch 36 is in neutral. The clutch 23 then establishes a torque-transmitting connection between the gear 21 and the input shaft 15. The gear 21 thus rotates, which in turn causes the 40 also to rotate. As the gear 40 is rotationally fast with the main shaft 34, the main shaft 34 and the gear 39 also rotate. As the gear 39 meshes with the gear 51, the gear 51 and the lay shaft 45 also rotate. Rotation of the lay shaft 45 effects rotation of the gear 48, which in turn rotates the gear 30 and the output shaft 26 connected thereto.

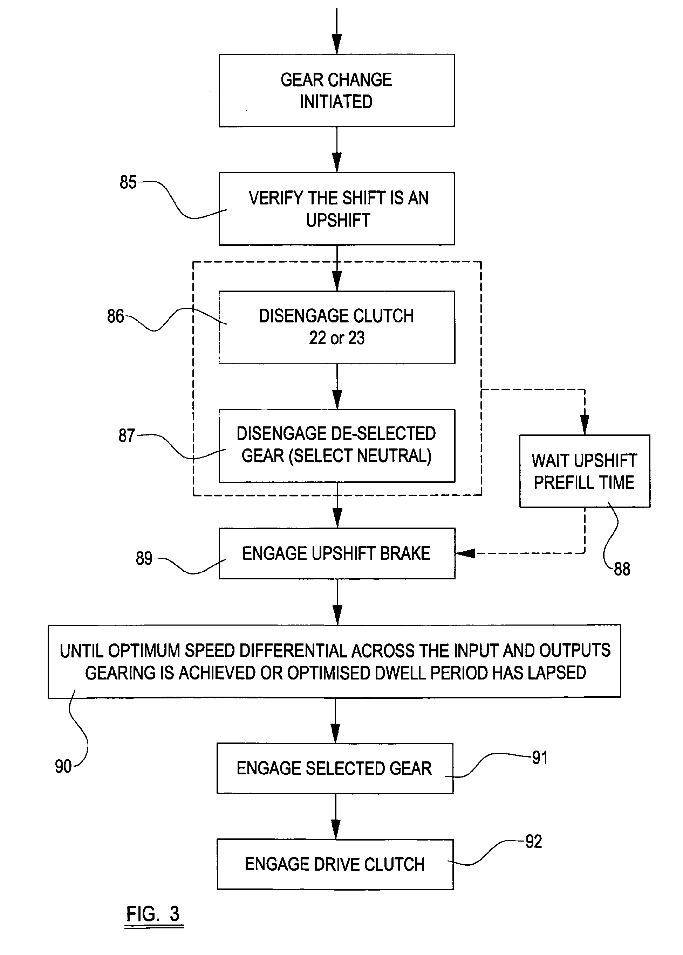

When an upshift gear change is required the method of controlling the gear change is that shown in the flow diagram of figure 3. The gear change may be requested by a user or by an automatic selection system. The demand for a gear change is sent to the controller 82. Once a gear change has been initiated the controller 82 at step 85 verifies that the gear change is an up-shift. Providing the gear change is an up-shift, for example from first forward gear to second forward gear at step 86, the "forward" clutch 23 is operated to disengage the connection between the gear 21 and the input shaft 15. At step 87 the clutch 60 then disengages the connection between the gear 51 and the lay shaft 45. Thus the transmission is in neutral, i.e. no gear is selected.

As indicated at step 88, the controller 82 is operable to provide a prefill time. The clutches 22, 23 have a clutch fill time, representing a delay between supply of fluid to the clutch and engagement of the clutch. By providing an up-shift prefill step 88 in parallel with steps 86 and 87, the clutch 22 is available immediately with a shorter or no delay at step 89.

At step 89 the "reverse" clutch 22 is then operated once or a plurality of times to engage the gear 20 with the input shaft 15. This operation of the "reverse" clutch 22 causes retardation of the rotational speed of the input gearing, as the input shaft 15 is being connected via clutch 22 gear 20, reverser gear 71 and gear 38 to the main shaft 34 which is rotating in an opposite direction.

The clutch 22 acts as an up-shift brake to cause retardation of the input gearing by a single operation or repeated operation of the "reverse" clutch 22. This is continued until the ratio of the rotational speeds of the input gearing and the output gearing reach a specific or predetermined value where the rotational speeds of the required parts of the input gearing and output gearing are substantially equal.

When changing from first forward gear to second forward gear the required part of the input gearing is the gear 50 and the required part of the output gearing is the lay shaft 45. Thus the input gearing must be retarded until the rotational speeds of the gear 50 and lay shaft 45 are substantially equal.

In this example, comparison of data provided by the speed sensors 80, 81 positioned near the gear 20 and output shaft 26 is used to determine when their rotational speeds of the required parts of the input gearing and output gearing are substantially equal. Once the speeds are substantially equal, the "reverse" clutch 22 disengages the connection between the gear 20 and the input shaft 15.

Alternatively, a predetermined optimal dwell time may be allowed to lapse (90). Thus a pre-programmed operational time for the clutch 20 may be used depending on which gear is being selected. This alternative does not require data from the sensors 80, 81.

At step 91 a further clutch, here the clutch 60, then establishes a torque-transmitting connection between the gear 50 and the lay shaft 45. The engagement of the connection between the gear 50 and the lay shaft 45 is much smoother when the rotational speeds of the gear 50 and lay shaft 45 are almost equal. It will be appreciated that their rotational speeds do not have to be matched exactly and indeed it may be desirable for the speed to be not exactly equal as the teeth of the clutch may then line up against one another and never mesh.

At step 92 the clutch 23 then re-establishes a torque-transmitting connection between the gear 21 and the input shaft 15, which drives the gear 40, gear 38, gear 50, gear 48, gear 30 and the output shaft 26. The transmission is thus driving through the second forward driving path (second forward gear).

When the user decides to change from second forward gear to third forward gear, a similar sequence is followed. Firstly the clutch 23 disengages the connection between the gear 21 and the input shaft 15. The clutch 60 then disengages the connection between the gear 50 and the lay shaft 45. The "reverse" clutch 22 is then operated, as above, once or a plurality of times to engage the gear 20 with the input shaft 15, which causes retardation of the rotational speed of the input gearing.

This is continued until the ratio of the rotational speeds of the input gearing 15 and the output gearing reach a specific value where the rotational speeds of the required parts of the input gearing and output gearing are substantially equal. When changing from second forward gear to third forward gear the required part of the input gearing is the main shaft 34 and the required part of the output gearing is the gear 37. Thus the input gearing must be retarded until the rotational speeds of the main shaft 34 and gear 37 are substantially equal.

The "reverse" clutch 22 then disengages the gear 20 and the input shaft 15.

The clutch 36 then establishes a torque-transmitting connection between the gear 37 and the main shaft 34. The clutch 23 then re-establishes a torque-transmitting connection between the gear 21 and the input shaft 15, which drives the gear 40, gear 37, gear 49, gear 48, gear 30 and the output shaft 26. The transmission is thus driving through the third forward driving path (third forward gear).

When the user decides to change from third forward gear to fourth forward gear, firstly the clutch 23 disengages the connection between the gear 21 and the input shaft 15. The clutch 36 then disengages the connection between the gear 37 and the main shaft 34. The "reverse" clutch 24 is then operated, again as above, once or a plurality of times to engage the gear 20 with the input shaft 15, which causes retardation of the rotational speed of the input gearing.

This is continued until the ratio of the rotational speeds of the input shaft 15 and the output shaft 26 reach a specific value where the rotational speeds of the required parts of the input gearing and output gearing are substantially equal. When changing from third forward gear to forth forward gear the required part of the input gearing is the main shaft 34 and the required part of the output gearing is the output shaft 26. Thus the input gearing must be retarded until the rotational speeds of the main shaft 34 and output shaft 26 are substantially equal.

The "reverse" clutch 22 then disengages the connection between the gear 20 and the input shaft 15.

The clutch 36 then establishes a torque-transmitting connection between the main shaft 34 and the output shaft 26. The clutch 23 then re-establishes a torque-transmitting connection between the gear 21 and the input shaft 15, which drives the gear 40 and the output shaft 26. The transmission is thus driving through the fourth forward driving path (fourth forward gear). The fourth forward driving path in this example provides a 1:1 ratio between the rotation speeds of the input shaft 15 and the output shaft 26.

When changing to a lower gear (down-shifting) the "forward" clutch 23 disengages the gear 21 from the input shaft 15 and then the clutches 36 or 60 is engaged to provide the required driving path or gear. Once this has been done, the "forward" clutch 23 then re-establishes the torque-transmitting connection between the gear 21 and the input shaft 15 which drives the output shaft 26 through the chosen forward driving path.

As will be appreciated, the roles of the "forward" clutch 23 and the "reverse" clutch 22 are reversed if the vehicle up-shifts between reverse driving paths. Firstly, once a reverse gear change has been initiated the controller determines whether the reverse gear change is an up-shift or a down-shift. If the reverse gear change is an up-shift, for example from first reverse gear to second reverse gear, the "reverse" clutch 22 disengages the connection between the gear 20 and the input shaft 15. The clutch 60 then disengages the connection between the gear 51 and the lay shaft 45. Thus the transmission is in neutral, i.e. no gear is selected.

The "forward" clutch 23 is then operated once or a plurality of times to engage the gear 21 with the input shaft 15. This operation of the clutch 23 causes retardation of the rotational speed of the gearing.

In this example, retardation of the input gearing by a single operation or repeated operation of the clutch 23 is continued until the ratio of the rotational speeds of the input gearing and output shaft reach a specific value where the rotational speeds of the required parts of the input gearing and output gearing are substantially equal. Once the speeds are substantially equal, the clutch 23 disengages the connection between the gear 21 and the input shaft 15.

The clutch 60 then establishes a torque-transmitting connection between the gear 50 and the lay shaft 45. The clutch 22 then re-establishes a torque-transmitting connection between the gear 20 and the input shaft 15, which drives the gear 71, gear 38, gear 50, gear 48, gear 30 and the output shaft 26. The transmission is thus driving through the second reverse driving path (second reverse gear).

Although the transmission shown herein has 4 forward and 4 reverse gear ratios for clarity, it will be apparent that any desired number of gears may be provided. For example, the JCB 'Fastrac' (RTM) has 54 forward and 18 reverse gears.

When used in this specification and claims, the terms "comprises" and "comprising" and variations thereof mean that the specified features, steps or integers are included. The terms are not to be interpreted to exclude the presence of other features, steps or components.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A method of controlling a vehicle transmission during a gear change thereof, the vehicle transmission including an input shaft, an output shaft, input gearing and output gearing, a first clutch for establishing a driving connection between the input shaft and the input gearing to drive the output shaft in a first direction, and a second clutch for establishing a driving connection between the input shaft and the input gearing to drive the output shaft in an opposite direction, the method comprising the steps of:-
disengaging the driving connection between the input shaft and the input gearing by means of the first clutch; and
subsequently establishing a driving connection between the input shaft and the input gearing by means of the second clutch to retard the rotational speed of the input gearing.

2. A method according to claim 1 wherein the method includes the subsequent step of disengaging the driving connection between the input shaft and the input gearing by means of the second clutch.

3. A method according to claim 1 or claim 2 wherein the method includes the subsequent step of re-establishing the driving connection between the input shaft and the input gearing by means of the first clutch.

4. A method according to any preceding claim wherein the method is carried out during an up-shift gear change.

5. A method according to any preceding claim wherein the driving connection established by means of the second clutch is once-only, with said driving connection being discontinued thereafter.

6. A method according to any one of claims 1 to 5 wherein the driving connection established by means of the second clutch is achieved by repeated establishment of said driving connection between the input shaft and the output shaft.

7. A method according to any preceding claim where the method includes an additional step of selecting neutral gear within the transmission after the driving connection between the input shaft and the input gearing by means of the first clutch has been disengaged.

8. A method according to any preceding claim wherein the rotational speed of the input shaft is retarded until the ratio of the rotational speeds of the input gearing and the output gearing reaches a specific value.

9. A method according to claim 8 wherein the specific value corresponds to the rotational speeds of required parts of the input gearing and output gearing being substantially equal.

10. A method according to claim 9 comprising the step of operating a further clutch to engage the required parts of the input gearing and the output gearing.

11. A method according to any preceding claim wherein the rotational speed of the input gearing is monitored by a first sensing means.

12. A method according to any one of claims 9 to 11 wherein the rotational speed of the output gearing is monitored by a second sensing means.

13. A method according to claim 12 dependant on claim 11 wherein data from the first and second sensing means is compared to determine whether further retardation of the input gearing is required.

14. A method according to any preceding claim wherein the first clutch is a forward clutch of the transmission and the second clutch is a reverse clutch of the transmission.

15. A method according to any one of claims 1 to 13 wherein the first clutch is a reverse clutch of the transmission and the second clutch is a forward clutch of the transmission.
